# EUROPEAN PATENT APPLICATION

(11) **EP 4 851 225 A1**
(43) Date of publication of application: **09.12.2026**
(21) Application number: 25748930.2
(22) Date of filing: 31.01.2025
(51) Int. Cl.: C08G 77/04, C08G 77/38, C08K 3/013, C08L 83/04

(54) **POLYORGANOSILOXANE AND RESIN COMPOSITION**

(30) Priority: 02.02.2024 JP 2024015046
(71) Applicant: Sekisui Chemical Co., Ltd., Osaka-shi, Osaka 530-8565 (JP)
(72) Inventor: KADOWAKI, Kazuki, Mishima-gun, Osaka 618-0021 (JP)
(74) Representative: Ter Meer und Partner mbB
(86) International application number: PCT/JP2025/003137
(87) International publication number: WO 2025/164751

(57) **Abstract**

A polyorganosiloxane having a structure represented by the following formula (1), in which the polyorganosiloxane has a number average molecular weight of 10000 or more and 40000 or less, and a ratio (Mn/N_{(A - B)}) of the number average molecular weight to an average number (N_{(A - B)}) of groups represented by A - B included in one molecule of the polyorganosiloxane is 5000 or more.

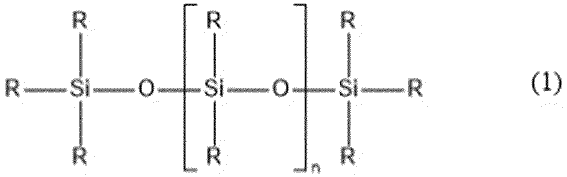

In the formula (1), Rs are each independently a group represented by the A - B or a monovalent hydrocarbon group having one to four carbon atoms,
at least one R of the Rs is a group represented by the A - B,
the A being a divalent organic group bonded to a silicon atom, the B being three or more conjugated ring structures constituting a common conjugated system, and
n being an integer of one or more.

## Description

### Technical Field

The present invention relates to a polyorganosiloxane and a resin composition containing a polyorganosiloxane.

### Background Art

In recent years, development of communication technology such as 5G has made heat countermeasures important for electronic devices, and accordingly demand for heat-dissipating materials has been increasing. Generally, heat-dissipating materials are formed of resin compositions containing a resin and a filler, and in order to achieve high heat-dissipating properties, it is effective to highly fill heat-dissipating materials with fillers or to use fillers having higher thermal conductivity. However, in resin compositions containing a resin and a filler, there is a case where the functions of materials are impaired due to poor compatibility between the resin and the filler such as deterioration of the flexibility of the compositions. In order to improve the poor compatibility between resins and fillers, it is known to add additives having an affinity to both resin and fillers or to add additives that improve the dispersing ability in resins.

For example, Patent Literature 1 discloses a polyorganosiloxane with a polycyclic aromatic group at one terminal represented by a specific structural formula as a treatment agent that improves the dispersing ability of nanocarbon in silicone resins and further describes that n, which is the degree of polymerization of an O-Si bond, is preferably an integer of 2 or more and 100 or less.

In addition, Patent Literature 2 discloses a mono-diol terminated polyorganosiloxane as a dispersant capable of imparting an excellent filler dispersing ability in liquid solvents and further describes that the number-average molecular weight of the organopolysiloxane is preferably 15000 or more.

Furthermore, Patent Literature 3 discloses an organopolysiloxane having a plurality of aromatic rings at one terminal represented by a specific structural formula as a surface treatment agent of a variety of functional fillers and further describes that n, which is the degree of polymerization of an O-Si bond, is an integer of 0 or more and 200 or less.

### Citation List

### Patent Literature

PTL1: JP 2018-197300 A
PTL2: JP 2022-81264 A
PTL3: JP 2016-534161 T

### Summary of Invention

### Technical Problem

However, conventional dispersants are adsorbed to fillers only by the π-π interaction of a conjugated filler linker and thus have insufficient adsorbing properties to fillers and are not capable of exhibiting a sufficient effect on improving the functions of heat-dissipating materials in some cases. In order to obtain a dispersant having higher adsorbing properties to fillers, introduction of a large number of filler linkers into the dispersant is conceivable, but the introduction of a large number of the linkers causes aggregation of dispersant molecules from the linkers as starting points, degrades the compatibility of the dispersant with resins, and causes phase separation with resins, which makes it impossible to obtain an effect of the addition of the dispersant.

In Patent Literature 1 to 3, the adsorbing properties of dispersants to fillers and filler aggregation attributed to dispersants are neither described nor suggested as important objects, and satisfaction of both the adsorbing properties to fillers and compatibility with resins is not expected.

Therefore, an object of the present invention is to provide a polyorganosiloxane having high adsorbing properties to fillers and excellent compatibility with resins.

### Solution to Problem

As a result of intensive studies, the present inventors considered whether the adsorbing properties of a dispersant to the filler surface are further enhanced when a Van Der Waals force acting between a polymer main chain and a filler surface becomes a certain level or higher. In conventional dispersants, an adsorption action attributed to a π-π interaction between a filler linker and a filler is a main factor; however, in dispersants having a polymer main chain having a certain molecular weight or higher and a filler linker, it was found that the dispersant can be adsorbed to a filler surface by means of two effects of the Van Der Waals force and the π-π interaction, and a higher dispersant addition effect can be obtained.

In addition, when the polymer main chain becomes too large, and the molecular weight of the dispersant becomes excessively high, from the viewpoint of entropy, it becomes difficult for dispersant molecules to be adsorbed to the filler surface in a planar manner, a loop structure is likely to be formed, and fillers aggregate through the loop-structured dispersant. Therefore, it was also found that when the molecular weight of the dispersant becomes excessively high, the dispersant addition effect deteriorates.

In consideration of what has been described above, it was found that the above-described problem can be solved by a polyorganosiloxane having a polymer chain and a specific filler linker and having a molecular weight and the number of filler linkers adjusted to predetermined requirements, and the following inventions were completed.

That is, the present invention provides the following [1] to [9].

[1] A polyorganosiloxane having a structure represented by the following formula (1), wherein the polyorganosiloxane has a number average molecular weight of 10000 or more and 40000 or less, and a ratio (Mn/N_{(A - B)}) of the number average molecular weight (Mn) to an average number (N_{(A - B)}) of groups represented by A - B included in one molecule of the polyorganosiloxane is 5000 or more, 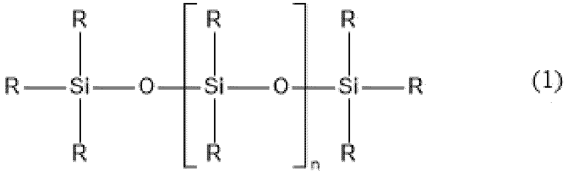
   Rs being each independently a group represented by the A - B or a monovalent hydrocarbon group having one to four carbon atoms,
   at least one R of the Rs being a group represented by the A - B,
   the A being a divalent organic group bonded to a silicon atom, the B being three or more conjugated ring structures constituting a common conjugated system, and
   n being an integer of one or more.
[2] The polyorganosiloxane according to [1], wherein the average number (N_{(A - B)}) of the groups represented by A - B is one or more and eight or less.
[3] The polyorganosiloxane according to [1] or [2], wherein the A has a cyclic ether or ester in a structure thereof.
[4] The polyorganosiloxane according to any one of [1] to [3], wherein the B is a condensed ring compound.
[5] The polyorganosiloxane according to any one of [1] to [4] represented by the following formula (2): 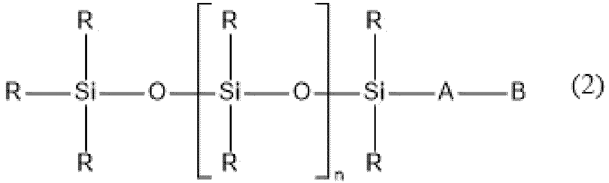 wherein R is a monovalent hydrocarbon group having one to four carbon atoms, and A, B, and n are the same as those in the formula (1).
[6] The polyorganosiloxane according to any one of [1] to [4] represented by the following formula (3): 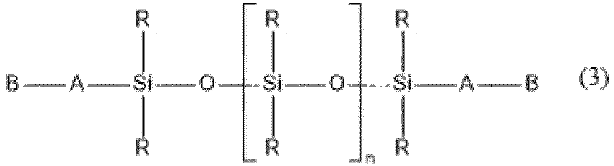 wherein R is a monovalent hydrocarbon group having one to four carbon atoms, and A, B, and n are the same as those in the formula (1).
[7] The polyorganosiloxane according to any one of [1] to [4] represented by the following formula (4): 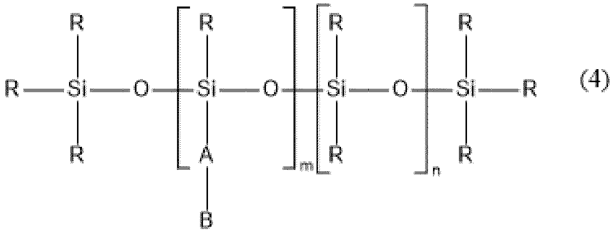 wherein R is a monovalent hydrocarbon group having one to four carbon atoms, m is an integer of one or more and eight or less, and A, B, and n are the same as those in the formula (1).
[8] The polyorganosiloxane according to [7], wherein the m is one or two.
[9] A resin composition comprising the polyorganosiloxane according to any one of [1] to [8], a silicone resin, and a filler.

### Advantageous Effects of Invention

According to the present invention, it is possible to provide a polyorganosiloxane having high adsorbing properties to fillers and excellent compatibility with resins.

### Description of Embodiment

### [Polyorganosiloxane]

A polyorganosiloxane of the present invention has a structure represented by the following formula (1).

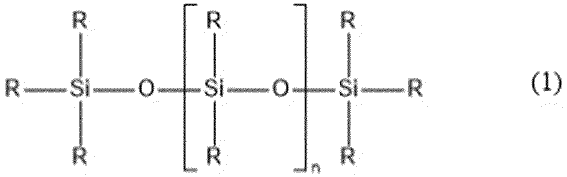

In the formula (1), Rs are each independently a group represented by A - B or a monovalent hydrocarbon group having one to four carbon atoms,
at least one R of Rs is a group represented by A - B,
A is a divalent organic group bonded to a silicon atom, B is three or more conjugated ring structures constituting a common conjugated system, and
n is an integer of one or more.

The above-described polyorganosiloxane having the structure represented by the formula (1) has a number average molecular weight of 10000 or more and 40000 or less. In a case where the number average molecular weight is less than 10000, the polyorganosiloxane and a filler are not sufficiently adsorbed to each other, and it becomes difficult to disperse the filler in a resin with the polyorganosiloxane. In addition, in a case where the number average molecular weight exceeds 40000, a loop structure attributed to a polymer chain in the polyorganosiloxane is formed, and there is a concern that the filler may aggregate through the loop structure. From these viewpoints, the number average molecular weight of the polyorganosiloxane is preferably 10200 or more and 35000 or less, more preferably 10500 or more and 30000 or less, still more preferably 15000 or more and 25000 or less, and far still more preferably more than 16000 and 25000 or less.

The number average molecular weight is a value obtained by gel permeation chromatography (GPC) measurement and polystyrene conversion. The number average molecular weight of the silicone resin, which will be described below, is also the same.

In the polyorganosiloxane of the present invention, the ratio (Mn/N_{(A - B)}) of the number average molecular weight to the average number (N_{(A - B)}) of groups represented by A - B included in one molecule is 5000 or more. When Mn/N_{(A - B)} is less than 5000, the proportion of the polymer main chain in the entire polyorganosiloxane molecule becomes too low, whereby the compatibility with a resin becomes insufficient, and there is a concern that it may be impossible to sufficiently disperse the filler in the resin with the polyorganosiloxane. From such a viewpoint, Mn/N_{(A - B)} is preferably 5200 or more, more preferably 8000 or more, and still more preferably 10000 or more.

In addition, Mn/N_{(A - B)} is preferably 40000 or less, more preferably 30000 or less, and still more preferably 20000 or less from the viewpoint of putting the number average molecular weight of the polyorganosiloxane into an appropriate numerical range and making it easy to make the adsorbing properties to the filler excellent or making it easy to curb aggregation of the filler through the loop structure.

In the present specification, the atomic bond A - B is the same as the group represented by A - B.

In addition, N_{(A - B)} can be calculated by, for example, procedures shown in the following (1) to (4).
(1) A mass spectrum or an NMR spectrum is measured, and the structure of the atomic bond A - B is identified.
(2) A UV-Vis absorption spectrum or a quantitative NMR spectrum is measured, and the amount of a substance (mol/g) of the atomic bond A - B per unit amount of the polyorganosiloxane is calculated.
(3) The number average molecular weight of the polyorganosiloxane is measured (a method for measuring the number average molecular weight is as described above). The number of molecules (mol/g) of the polyorganosiloxane per unit amount of the polyorganosiloxane is calculated from the number average molecular weight.
(4) The average number (N_{(A - B)}) of the groups represented by A - B included in one molecule of the polyorganosiloxane is calculated by obtaining the ratio between the individual numerical values calculated in the (2) and (3).

Here, for example, in a case where the structure of a raw material of the polyorganosiloxane is known or the like, some of the procedures (1) to (4) can be omitted.

### <Polyorganosiloxane represented by formula (1)>

In the formula (1), Rs are each independently a group represented by A - B or a monovalent hydrocarbon group having one to four carbon atoms.

At least one R of the plurality of Rs is the group represented by A - B. A is a divalent organic group and bonds to a silicon atom in the formula (1).

A is a divalent organic group bonded to a silicon atom in the formula (1), preferably a divalent organic group having 11 or less carbon atoms, and more preferably a divalent organic group having 10 or less carbon atoms. The polyorganosiloxane in which the number of carbon atoms in A is a certain number or less is likely to enhance the dispersing ability of fillers, which is preferable. In addition, the lower limit of the number of carbon atoms in A is not particularly limited, but A is preferably a divalent organic group having four or more carbon atoms.

A may be a hydrocarbon group, but may have a heteroatom. In a case where A has a heteroatom, among the constituent atoms of A, any of an α-position atom, a β-position atom, and a γ-position atom is preferably a heteroatom. This makes it easy to make the compatibility with resins favorable. From the viewpoint of enhancement in compatibility with resins, the α-position atom or the β-position atom is preferably a heteroatom, and the α-position atom is more preferably a heteroatom.

Here, the α-position atom refers to an atom bonded to a conjugated ring that B has (that is, one conjugated ring among three or more conjugated rings that B has) among the constituent atoms of A. The β-position atom refers to an atom bonded to the α-position atom among the constituent atoms of A. The γ-position atom is an atom that is bonded to the β-position atom and is not the α-position atom.

A may have a heteroatom in a portion other than the α-position atom, the β-position atom, and the γ-position atom.

The heteroatom is not particularly limited, examples thereof include an oxygen atom, a nitrogen atom, a sulfur atom, and a boron atom, and among these, an oxygen atom is preferable from the viewpoint of effectively enhancing the compatibility with resins.

In a case where A has the heteroatom, A has a structural unit having the heteroatom. Examples of the structural unit include ethers, esters, amides, urethanes, thioethers, and thioesters, and among these, from the viewpoint of enhancement in adsorbing properties to fillers and enhancement in compatibility with resins, ethers or esters are preferable, ethers are more preferable, and cyclic ethers are particularly preferable. The cyclic ether refers to an ether having a structure in which carbon in a cyclic hydrocarbon has been substituted with oxygen.

In addition, A preferably has a skeleton represented by the following formula (5-1) or formula (5-2) from the viewpoint of enhancement in adsorbing properties to fillers and enhancement in compatibility with resins.

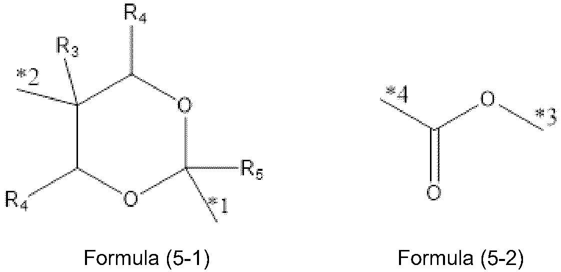

In the formula (5-1), the marks of *1 and *2 are atomic bonds, R₄ is a hydrogen atom or a hydrocarbon group having one to four carbon atoms and preferably a hydrogen atom. Two R₄s may be the same as or different from each other. R₃ is a hydrogen atom or a hydrocarbon group having one to four carbon atoms, preferably a hydrocarbon group having one to four carbon atoms, more preferably a hydrocarbon group having one to three carbon atoms, and still more preferably an ethyl group. R₅ is a hydrogen atom or a hydrocarbon group having one to four carbon atoms and preferably a hydrogen atom. Oxygen atoms in the formula (5-1) are the above-described β-position atoms or γ-position atoms and preferably the β-position atoms.

In the formula (5-2), the marks of *3 and *4 are atomic bonds, and an oxygen atom having the atomic bond of *3 is the above-described α-position atom, β-position atom, or γ-position atom.

A preferably has a skeleton represented by the formula (5-1) among the above-described skeletons.

Furthermore, from the viewpoint of enhancement in adsorbing properties to fillers and enhancement in compatibility with resins, A preferably has a structure represented by any one of the following formula (6) to formula (10).

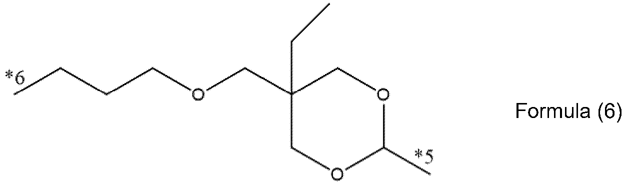

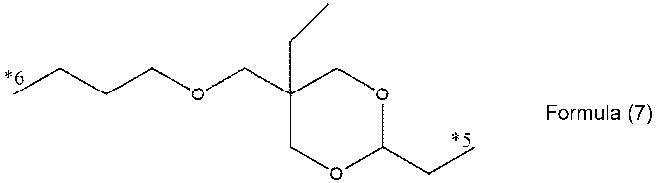

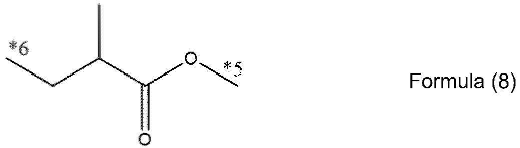

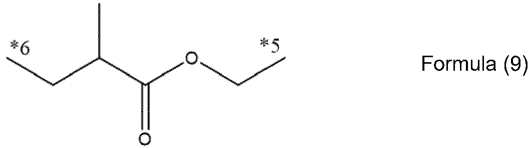

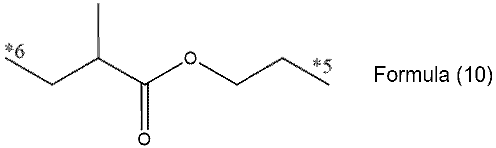

The mark of *5 in the formula (6) to the formula (10) is an atomic bond that bonds to the conjugated ring that B has, and the mark of *6 is an atomic bond that bonds to the silicon atom in the formula (1).

In addition, A may be A in which none of the α-position atom, the β-position atom, and the γ-position atom is a heteroatom. Specifically, A may be a hydrocarbon group such as an alkylene group such as a methylene group or an ethylene group or an arylene group such as a phenylene group. In addition, an atom other than the α-position atom, the β-position atom, and the γ-position atom may be a heteroatom and may be an oxygen-containing hydrocarbon group composed of an alkylene group and an ester group or the like.

B in the formula (1) is three or more conjugated ring structures constituting a common conjugated system. Conjugation refers to a state in which unsaturated bonds and single bonds alternately arranged in the molecular structure, thereby causing stabilization, electron delocalization (existence over the entire conjugated system) due to interaction of p orbitals.

B preferably has three or more aromatic ring structures, and in particular, more preferably has three or more and six or less conjugated aromatic six-membered rings. When the number of the aromatic six-membered rings is three or more, adsorbing properties to fillers enhance, and it becomes easy to disperse fillers in resins. In addition, when the number of the aromatic six-membered rings is six or less, it becomes easy for the compatibility of the polyorganosiloxane to resins to enhance.

From the viewpoint of enhancement in adsorbing properties to fillers and compatibility with resins, the number of the aromatic six-membered rings is preferably four or more and five or less.

The conjugated ring may be a condensed ring compound or a non-condensed ring compound, but is preferably a condensed ring compound. In a case where B is a condensed ring compound or a case where B is a condensed ring compound as described above, it becomes easy to enhance adsorbing properties to fillers and disperse fillers in resins. In addition, a condensed ring is preferably an aromatic ring, and the condensed ring compound is preferably a condensed aromatic ring compound.

Examples of the condensed ring compound include anthracene derivatives, phenanthrene derivatives, triphenylene derivatives, pyrene derivatives, tetracene derivatives, picene derivatives, perylene derivatives, pentaphene derivatives, pentacene derivatives, and hexaphene derivatives, and among these, anthracene derivatives, pyrene derivatives, or perylene derivatives is preferable, and pyrene derivatives or perylene derivatives is more preferable. Here, a derivative means a compound that may have a substituent, and for example, the anthracene derivative includes both unsubstituted anthracene and substituted anthracenes, which is also true for other derivatives.

In a case where the condensed ring compound has a substituent, at least one of hydrogen atoms constituting the condensed ring compound has been substituted with the substituent. Examples of the substituent include organic groups having one to 10 carbon atoms.

From the viewpoint of making it easy to enhance the compatibility of the polyorganosiloxane of the present invention with resins, the condensed ring compound preferably has no substituents. Therefore, B is more preferably anthracene, pyrene, or perylene and particularly preferably pyrene or perylene.

In addition, the condensed ring compound may be bonded to A through any carbon atom constituting the condensed ring.

In addition, the non-condensed ring compound is preferably a non-condensed aromatic ring compound and is, for example, a structure in which a plurality of aromatic rings are linked to each other with a single bond, and examples thereof include terphenyl derivatives. Non-condensed ring compound as well the condensed ring compound may be bonded to A through any carbon atom constituting the aromatic ring.

As B in the present invention, what has been described above can be used with no particular limitations, but a suitable B structure will be shown below.

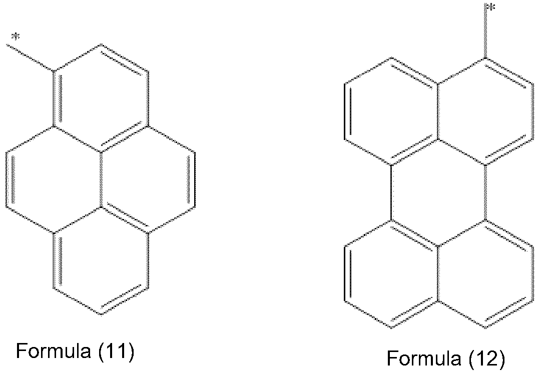

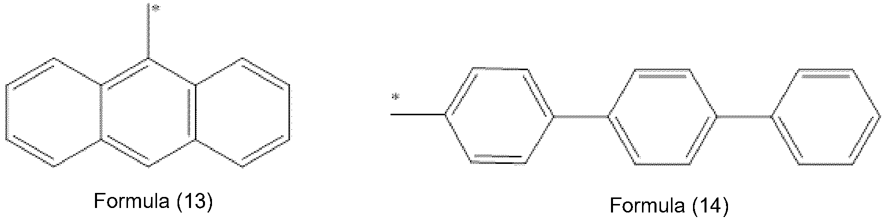

In the formula (11) to the formula (14), * is an atomic bond bonded to A.

Among the formula (11) to the formula (14), any compound of the formula (11) to the formula (13), which are condensed ring compounds, is preferable, and in particular, pyrene of the formula (11) or perylene of the formula (12) is more preferable, and perylene of the formula (12) is still more preferable.

In the formula (1), at least one R is a group represented by the A - B, and the remaining Rs are hydrocarbon groups having one to four carbon atoms. In the formula (1), the number of the groups represented by A - B in the plurality of Rs is, for example, one or more and eight or less, preferably one or more and five or less, more preferably one or more and four or less, and still more preferably one or two, and the remainder is a monovalent hydrocarbon group having one to four carbon atoms. In the case of a plurality of the groups represented by A - B, the plurality of groups represented by A - B may be the same as or different from each other.

Examples of the monovalent hydrocarbon group having one to four carbon atoms include a methyl group, an ethyl group, a propyl group, and a butyl group, and among these, a methyl group is preferable. In the case of a plurality of the monovalent hydrocarbon groups having one to four carbon atoms, the plurality of monovalent hydrocarbon groups having one to four carbon atoms may be the same as or different from each other.

In the formula (1), n means the number of repetitions, and n is an integer of one or more. n is not particularly limited as long as n is an integer of one or more, and from the viewpoint of the number average molecular weight of the polyorganosiloxane, n is, for example, 530 or less, preferably 500 or less, more preferably 400 or less, and still more preferably 350 or less and is, for example, 30 or more, preferably 50 or more, more preferably 100 or more, and still more preferably 150 or more.

The polyorganosiloxane having the structure represented by the formula (1) may have the group represented by A - B at one terminal, at both terminals, at a side chain, at a single terminal and a side chain, or at both terminals and a side chain.

### <Polyorganosiloxane represented by formula (2)>

A polyorganosiloxane according to one embodiment of the present invention has a structure represented by the following formula (2). The polyorganosiloxane has the group represented by A - B at one terminal.

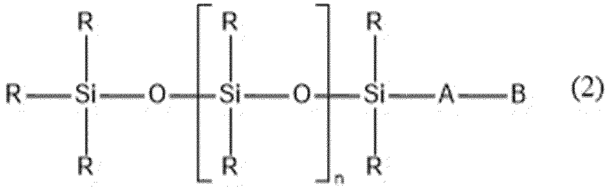

In the formula (2), Rs are each independently a monovalent hydrocarbon group having one to four carbon atoms, and A, B, and n are the same as those in the formula (1).

Examples of the monovalent hydrocarbon group having one to four carbon atoms include alkyl groups such as a methyl group, an ethyl group, a propyl group, and a butyl group, and among these, a methyl group is preferable. The alkyl group is preferably a straight chain, but may be branched. The plurality of Rs may be the same as or different from each other. In the formula (2), A, B, and n are the same as those in the formula (1) and are as described above.

The polyorganosiloxane represented by the formula (2) has the group represented by A - B at one terminal and makes it easy to enhance adsorbing properties to fillers, which is preferable.

### <Polyorganosiloxane represented by formula (3)>

A polyorganosiloxane according to one embodiment of the present invention has a structure represented by the following formula (3). The polyorganosiloxane has the groups represented by A - B at both terminals.

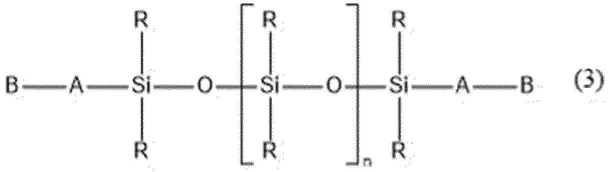

In the formula (3), Rs are each independently a monovalent hydrocarbon group having one to four carbon atoms, and A, B, and n are the same as those in the formula (1).

R in the formula (3) is the same as R in the formula (2), and A, B, and n are the same as those in the formula (1).

### <Polyorganosiloxane represented by formula (4)>

A polyorganosiloxane according to one embodiment of the present invention has a structure represented by the following formula (4). The polyorganosiloxane has the groups represented by A - B at a side chain.

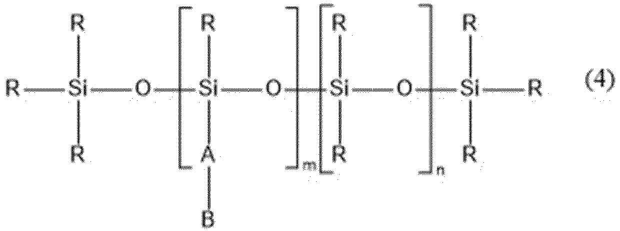

In the formula (4), R is a monovalent hydrocarbon group having one to four carbon atoms or a hydrogen atom, m is an integer of one or more and 10 or less, and A, B, and n are the same as those in the formula (1).

R in the formula (4) is the same as R in the formula (2), and A, B, and n are the same as those in the formula (1).

In the formula (4), m is an integer of one or more and eight or less, preferably an integer of one or more and six or less, more preferably an integer of one or more and five or less, and still more preferably one or two. When m is within such a range, adsorbing properties to fillers enhance, and self-aggregation of the polyorganosiloxanes is curbed, which is preferable.

The polyorganosiloxane represented by the formula (4) may be a random polymer or a block polymer. In more detail, a unit indicated in the parenthesis m and a unit indicated in the parenthesis n may be present in a block-like manner or randomly in the molecule.

The polyorganosiloxane used in the present invention preferably has, among what has been described above, the structure represented by the above formula (2) or (3) and more preferably has the structure represented by the above formula (2).

### <Method for producing polyorganosiloxane>

A method for producing polyorganosiloxane of the present invention is not particularly limited, and the polyorganosiloxane can be obtained by reacting a polyorganosiloxane having a generally available functional group and a compound that has three or more conjugated rings constituting a common conjugated system and is capable of reacting with the functional group of the polyorganosiloxane. As an example, the polyorganosiloxane of the present invention can be produced using an acetalization reaction between an aldehyde and a diol, a hydrosilylation reaction between a hydrosilyl group and a carbon-carbon unsaturated bond, or the like.

For example, the polyorganosiloxane of the present invention can be produced by a reaction between a polyorganosiloxane having a diol structure and a compound having an aldehyde group and three or more conjugated rings constituting a common conjugated system. As another method, the polyorganosiloxane of the present invention can be produced by a reaction between a polyorganosiloxane having a hydrosilyl group at a terminal and/or a side chain and a compound having a group having a carbon-carbon unsaturated bond such as an acrylate group or a methacrylate group and three or more conjugated rings constituting a common conjugated system.

In addition, the polyorganosiloxane of the present invention may be a polyorganosiloxane obtained by additional chain extension of the compound having any one of the structures indicated by the formulae (1) to (4) with a chain extender. Chain extension makes it easy for the polyorganosiloxane of the present invention to have a larger number average molecular weight. The chain extender may be a straight-chain polyorganosiloxane or a cyclic polyorganosiloxane such as octamethylcyclotetrasiloxane or decamethylcyclopentasiloxane.

### [Resin composition]

The present invention also enables the provision of a resin composition containing the above-described polyorganosiloxane, a filler, and a silicone resin. The resin composition of the present invention contains the above-described polyorganosiloxane, whereby the polyorganosiloxane and the filler adsorb to each other, and the filler is dispersed in the resin by means of the polyorganosiloxane, which makes it possible to decrease the viscosity thereof.

Hereinafter, the resin composition will be described in detail.

The content of the polyorganosiloxane in the resin composition is, for example, 0.5 parts by mass or more and 50 parts by mass or less, preferably 1 part by mass or more and 40 parts by mass or less, and more preferably 3 parts by mass or more and 30 parts by mass or less relative to 100 parts by mass of the filler. When the content of the polyorganosiloxane is the above-described lower limit value or more, it becomes easy to appropriately disperse the filler to impart excellent flexibility to the resin composition. In addition, when the content of the polyorganosiloxane is the above-described upper limit value or less, it becomes easy to exhibit an effect commensurate with the content of the polyorganosiloxane.

### (Filler)

The resin composition of the present invention contains a filler, which makes it possible to impart excellent thermal conductivity to the resin composition. The filler may be a filler having no π electrons or a filler having π electrons, but a filler having π electrons is preferably used. In addition, the filler having π electrons appropriately has a six-membered ring atomic structure as a constituent unit in which the six-membered ring atomic structure has π electrons. Specific examples of the filler having π electrons include boron nitride, and carbon materials. The use of the filler having π electrons makes it easy for the filler to be adsorbed to a linker of the polyorganosiloxane.

Examples of the boron nitride include hexagonal boron nitride, and more specific examples thereof include a boron nitride nanotube, a boron nitride nanosheet, and a hexagonal boron nitride particle.

The boron nitride nanotube is a tubular material formed of a hexagonal boron nitride. An ideal structure of the boron nitride nanotube is a single-walled tube or multi-walled tube formed such that the surface of a six-membered ring mesh becomes parallel to the tube axis. The boron nitride nanotube having a single-walled tube is called a single wall tube, and the boron nitride nanotube having a multi-walled tube is called a multi-wall tube. As the boron nitride nanotube, any of the single wall tube and the multi-wall tube may be used, and these may be combined.

The boron nitride nanotube has, for example, an average diameter of 1 nm or more and 70 nm or less and an average length of 100 nm or more and 50 µm or less. When the average diameter and the average length are set within the above-described ranges, it becomes easy to increase the thermal conductivity of the resin composition while making the flexibility of the resin composition favorable.

The average diameter of the boron nitride nanotube is preferably 3 nm or more and more preferably 4 nm or more. In addition, the average diameter of the boron nitride nanotube is preferably 10 nm or less and more preferably 8 nm or less. In addition, the average length of the boron nitride nanotube is preferably 500 nm or more and more preferably 1 µm or more and is preferably 20 µm or less, more preferably 8 µm or less, and still more preferably 5 µm or less.

The diameter of the boron nitride nanotube indicates the outer diameter in the case of the single wall tube and means the outer diameter of the tube positioned on the outermost side in the case of the multi-wall tube. The diameter and length of the boron nitride nanotube may be measured on an image obtained by observation with an electron microscope, for example, TEM (transmission electron microscope), and the average diameter and the average length may be obtained from the arithmetic averages of 50 arbitrary nanotubes. What has been described above is also true for the diameter and length of a carbon nanotube, which will be described below.

The boron nitride nanosheet is a nanosheet formed of boron nitride and having an ultrathin two-dimensional sheet structure and has, for example, a structure of a hexagonal boron nitride in a single layer or in a plurality of layers disposed on one another. As the boron nitride nanosheet, for example, a nanosheet having an average thickness of 20 nm or less is used. The average thickness of the boron nitride nanosheet is preferably less than 10 nm, more preferably 6 nm or less, and still more preferably 4 nm or less from the viewpoint of enhancing thermal conductivity while making the resin composition sufficiently flexible. In addition, the lower limit of the average thickness of the boron nitride nanosheet is not particularly limited and is, for example, 1 nm.

In addition, the size of the boron nitride nanosheet is not particularly limited, but the average longest diameter is, for example, 200 nm or more and 3 µm or less and preferably 500 nm or more and 2 µm or less.

The thickness and longest diameter of the boron nitride nanosheet can be measured on an image obtained by observation with an electron microscope, for example, TEM (transmission electron microscope), and the average thickness and the average longest diameter of each of the boron nitride nanosheet may be obtained from the arithmetic averages of 50 arbitrary nanosheets in the image of the electron microscope. What has been described above is also true for the longest diameter and thickness of the carbon nanosheet, which will be described below.

The hexagonal boron nitride particle is a particulate boron nitride particle other than the boron nitride nanosheet and the boron nitride nanotube, is not particularly limited in terms of shape, and may be a boron nitride particle having any shape such as a scaly shape, a spherical shape, a polygonal shape, or an irregular shape. In addition, the hexagonal boron nitride particle may be an aggregated particle in which a plurality of primary particles have aggregated.

The primary particle diameter of the hexagonal boron nitride particle is not particularly limited and may be a nano-size or a micro-size. The average primary particle diameter of the hexagonal boron nitride particle is, for example, 5 nm or more and 100 µm or less, preferably 10 nm or more and 50 µm or less, and more preferably 0.1 µm or more and 40 µm or less.

In addition, the particle diameter of the aggregated particle is also not particularly limited, and the average particle diameter of the aggregated particle is, for example, 0.1 µm or more and 250 µm or less, more preferably 0.5 µm or more and 200 µm or less, and still more preferably 1 µm or more and 150 µm or less.

For the primary particle diameter of the hexagonal boron nitride particle or the particle diameter of the aggregated particle, the maximum diameter of particles on an image obtained by observation with an electron microscope, for example, TEM (transmission electron microscope), or SEM (scanning electron microscope) may be measured. In addition, the average particle diameter such as the average primary particle diameter may be obtained from an arithmetic average of the maximum diameters of 50 arbitrary particles. What has been described above is also true for other fillers such as a graphite particle, which will be described below.

The carbon material is not particularly limited, and examples thereof include carbon fibers, carbon nanotubes, carbon nanosheets, graphite, and graphene.

As the carbon fibers, graphitized carbon fibers are preferable. In the graphitized carbon fiber, the crystal plane (that is, the surface of a six-membered ring mesh) of graphite continues in the fiber axial direction and the thermal conductivity is high along the fiber axial direction. The graphitized carbon fiber preferably has a high degree of graphitization.

The fiber diameter of the graphitized carbon fiber is not particularly limited, and the average diameter is, for example, 1 µm or more and 30 µm or less and preferably 5 µm or more and 20 µm or less. When the fiber diameter is within the above-described range, it is easy to industrially produce the graphitized carbon fiber, and it becomes easy to increase the thermal conductivity of the resin composition.

The average fiber length of the carbon fiber is preferably 10 µm or more and 600 µm or less, more preferably 15 µm or more and 500 µm or less, and still more preferably 20 µm or more and 300 µm or less as described above.

The average diameter or average fiber length of the carbon fiber may be measured on an image obtained by observation with an electron microscope, for example, TEM (transmission electron microscope), or SEM (scanning electron microscope), and the arithmetic averages of the diameters and fiber lengths of 50 arbitrary carbon fibers may be regarded as the average diameter and the average fiber length.

The carbon nanotube is a substance having a structure in which a graphite sheet of a hexagonal mesh-like carbon atom arrangement has been tubularly wound, and a carbon nanotube wound in a single layer is called a single-wall carbon nanotube, and a carbon nanotube wound in multiple layers is called a multi-wall carbon nanotube.

In the present invention, the kind of the carbon nanotube is not particularly limited and may be any of the single-wall carbon nanotube, the multi-wall carbon nanotube, and a carbon nanotube for which both the single-wall carbon nanotube and the multi-wall carbon nanotube are combined.

The average diameter of the carbon nanotube is preferably 1 nm or more and 100 nm or less and more preferably 2 nm or more and 15 nm or less. The average length of the carbon nanotube is preferably 0.1 µm or more and 1000 µm or less and more preferably 10 µm or more and 500 µm or less.

The carbon nanosheet is a nanosheet having a structure in which hexagonal mesh-like carbon atomic arrangements are made in the plane direction, having an ultrathin two-dimensional sheet structure, and has, for example, a structure of hexagonal mesh-like carbon atomic arrangements in a single layer or in a plurality of layers disposed on one another.

The average thickness of the carbon nanosheet is, for example, 20 nm or less and preferably 10 nm or less. In addition, the lower limit of the average thickness of the carbon nanosheet is not particularly limited and is, for example, 0.7 nm. In addition, the size of the carbon nanosheet is not particularly limited, but the average longest diameter is, for example, 0.2 µm or more and 3 µm or less and preferably 5 µm or more and 2.5 µm or less.

Examples of the graphite include graphite particles. The graphite particle is a carbon particle of any shape other than the above-described carbon fiber, carbon nanotube, and carbon nanosheet, is not particularly limited in terms of shape, and may be a graphite particle having any shape such as a scaly shape, a spherical shape, a polygonal shape, or an irregular shape. In addition, the graphite particle may be an aggregated particle in which a plurality of primary particles have aggregated.

The average primary particle diameter of the graphite particle is, for example, 5 nm or more and 100 µm or less, preferably 10 nm or more and 50 µm or less, and more preferably 0.1 µm or more and 40 µm or less.

In addition, the particle diameter of the aggregated particle is also not particularly limited, and the average particle diameter of the aggregated particle is, for example, 0.1 µm or more and 250 µm or less, more preferably 0.5 µm or more and 200 µm or less, and still more preferably 1 µm or more and 150 µm or less.

The graphene has a hexagonal mesh-like planar layer and is obtained by separating the layers from each other of a graphite having a lamella structure in which the hexagonal mesh-like planar layers are disposed on one another by the Van Der Waals force. The average thickness of the graphene is, for example, 3 nm or more and 100 nm or less and preferably 7 nm or more and 50 nm or less. The average thickness can be measured on an image obtained by observation with, for example, TEM (transmission electron microscope) and may be obtained from an arithmetic average of 50 arbitrary graphene pieces in the image of the electron microscope.

In the present invention, in the case of using the filler having π electrons as the filler, the filler having π electrons more preferably contains at least one selected from the group consisting of boron nitride, carbon nanotubes, carbon fibers, graphite, and graphene. Among the fillers having π electrons, the use of these fillers makes it easy to enhance the thermal conductivity of the resin composition. In addition, since these fillers have excellent adsorbing properties to polyorganosiloxanes, the fillers can be easily blended in a state appropriately dispersed in the resin composition.

The filler having no π electrons is not particularly limited, and examples thereof include oxides, nitrides, carbides, and metal hydroxides.

Examples of the oxides include metal oxides such as iron oxide, zinc oxide, aluminum oxides such as alumina, magnesium oxide, titanium oxide, cerium oxide, and zirconium oxide, and oxides other than metal oxides such as silicon oxide (silica).

Examples of the nitrides include metal nitrides such as aluminum nitride, gallium nitride, chromium nitride, tungsten nitride, magnesium nitride, molybdenum nitride, and lithium nitride, and nitrides other than metal nitrides such as silicon nitride.

Examples of the carbides include metal carbides such as aluminum carbide, titanium carbide, and tungsten carbide, and carbides other than metal carbides such as silicon carbide and boron carbide.

Examples of the metal hydroxides include aluminum hydroxide, calcium hydroxide, and magnesium hydroxide.

In the case of using the filler having no π electrons, the metal oxides are preferably used, and aluminum oxide is more preferably used.

The average primary particle diameter of the filler having no π electrons is not particularly limited, but is preferably 0.1 µm or more and 100 µm or less, more preferably 0.5 µm or more and 50 µm or less, and still more preferably 0.5 µm or more and 15 µm or less.

The above-described fillers may be used singly, or in combination of two or more.

The content of the filler in the resin composition is preferably 10 mass% or more and 95 mass% or less based on the total amount of the resin composition. When the content of the filler is set within the above-described range, it is possible to enhance the thermal conductivity while maintaining the flexibility of the resin composition. The content of the filler in the resin composition is more preferably 20 mass% or more and 90 mass% or less and still more preferably 30 mass% or more and 85 mass% or less.

### (Silicone resin)

As the silicone resin, a silicone resin different from the above-described polyorganosiloxane is preferably used. The silicone resin preferably serves as a matrix resin in the resin composition, and the filler is preferably dispersed in the silicone resin and retained in the silicone resin.

The silicone resin is typically a compound not having three or more conjugated ring structures constituting a common conjugated system. The three or more conjugated ring structures constituting a common conjugated system mentioned herein are the same meaning as "B" described in the formula (1).

Examples of the silicone resin include curable silicone resins. The curable silicone resins may be any of condensation curable silicone resins and addition reaction curable silicone resins, but are preferably addition reaction curable silicone resins.

The silicone resin may be branched or may have a straight chain structure, and specific examples thereof include organopolysiloxanes having an addition reactive group. The addition reactive group means a functional group that is reactive by means of an addition reaction, and typical examples thereof include alkenyl groups, methacryloyl groups, acryloyl groups, and hydrosilyl groups. The organopolysiloxanes having an addition reactive group may be used as addition reaction curable silicone resins.

Preferable examples of the organopolysiloxanes having an addition reactive group include organopolysiloxanes having an alkenyl group and organopolysiloxanes having a hydrosilyl group.

The organopolysiloxane having an alkenyl group is an addition reaction curable silicone resin that is cured by combination with an organopolysiloxane having a hydrosilyl group. The organopolysiloxane having an alkenyl group appropriately has one or two or more alkenyl groups in the molecule and preferably has two or more alkenyl groups.

In addition, the alkenyl group may be incorporated into any of a terminal or the middle or may be incorporated into both a terminal and the middle of a molecular chain in a polysiloxane structure in the organopolysiloxane, but is preferably incorporated into at least a terminal and further preferably incorporated into both terminals of the molecular chain composed of the polysiloxane structure.

The alkenyl group is not particularly limited, examples thereof include alkenyl groups having two to eight carbon atoms and include a vinyl group, an allyl group, a butenyl group, a pentenyl group, a hexenyl group, a heptenyl group, and an octenyl group, and among these, a vinyl group is preferable from the viewpoint of easiness of synthesis, reactivity, or the like. In addition, the alkenyl group appropriately is an alkenyl group directly bonded to a silicon atom.

As residual groups bonded to silicon atoms other than the alkenyl group in the organopolysiloxane having an alkenyl group, alkyl groups having approximately one to 18 carbon atoms such as a methyl group, an ethyl group, a propyl group, a butyl group, a hexyl group, and a dodecyl group; aryl groups having approximately six to 12 carbon atoms such as a phenyl group; and aralkyl groups having approximately seven to 18 carbon atoms such as a 2-phenylethyl group and a 2-phenylpropyl group are exemplified, and furthermore, specific examples thereof include substituted hydrocarbon groups such as a chloromethyl group and a 3,3,3-trifluoropropyl group.

Among these, a methyl group is preferable from the viewpoint of easiness of synthesis or the like. In addition, among the residual groups bonded to silicon atoms, 80 mol% or more is preferably methyl groups, 90 mol% or more is more preferably methyl groups, and 100 mol% is still more preferably methyl groups. The organopolysiloxane having an alkenyl group typically does not have any hydrogen atoms as the residual groups bonded to silicon atoms, that is, the silicone resin preferably contains no hydrosilyl groups.

Specific examples of the organopolysiloxanes having an alkenyl group include vinyl-terminated organopolysiloxanes such as vinyl-terminated polydimethylsiloxane, vinyl-terminated polyphenylmethylsiloxane, vinyl-terminated dimethylsiloxane-diphenylsiloxane copolymers, vinyl-terminated dimethylsiloxane-phenylmethylsiloxane copolymers, and vinyl-terminated dimethylsiloxane-diethylsiloxane copolymers.

The organopolysiloxane having a hydrosilyl group is an addition reaction curable silicone resin that is cured by combination with the above-described organopolysiloxane having an alkenyl group. The organopolysiloxane having a hydrosilyl group appropriately has one or two or more hydrosilyl groups in the molecule. The hydrosilyl group may be incorporated into any of a terminal of a molecular chain or the middle of the molecule chain in a polysiloxane structure, but is preferably incorporated into at least a terminal and more preferably incorporated into both terminals of the molecular chain of the polysiloxane structure, respectively.

Specific examples of residual groups bonded to silicon atoms other than the hydrosilyl group in the organopolysiloxane having a hydrosilyl group are as described for the organopolysiloxanes having an alkenyl group and will not be described again. In addition, as the residual group, a methyl group is preferable, and a preferable proportion thereof is as described for the organopolysiloxanes having an alkenyl group. Typically, the organopolysiloxane having a hydrosilyl group preferably has no alkenyl groups.

Examples of the organopolysiloxanes having a hydrosilyl group include methylhydrosiloxane-dimethylsiloxane copolymers, polymethylhydrosiloxane, polyethylhydrosiloxane, and methylhydrosiloxane-phenylmethylsiloxane copolymers. These may or may not contain a hydrosilyl group at a terminal.

The organopolysiloxanes may be organopolysiloxanes having no addition reactive groups, and examples thereof include silicone oil. Examples of the silicone oil include not only straight silicone oils such as phenylmethylsiloxane oil such as dimethylsiloxane oil (polydimethylsiloxane), polyphenylmethylsiloxane, dimethylsiloxane-diphenylsiloxane copolymers, and dimethylsiloxane-phenylmethylsiloxane but also non-reactive modified silicone oils in which a non-reactive organic group has been introduced into a main chain having a polysiloxane structure, a side chain bonded to the main chain, or a terminal of the main chain. The non-reactive organic group is an organic group having no addition reactive groups. Examples of the non-reactive modified silicone oils include polyether-modified silicone oil, aralkyl-modified silicone oil, fluoroalkyl-modified silicone oil, long-chain alkyl-modified silicone oil, higher fatty acid ester-modified silicone oil, higher fatty acid amide-modified silicone oil, and phenyl-modified silicone oil. Among these, straight silicone oils are preferable as the silicone oil, and among the straight oils, dimethylsiloxane oil is more preferable.

In addition, the organopolysiloxane may be an organopolysiloxane other than what has been described above and may be an organopolysiloxane having an alkoxy group, an organopolysiloxane having a silanol group, or the like.

The silicone resins, which have been described above, may be used singly, or in combination of two or more.

The silicone resin preferably has a number average molecular weight of 5000 or more and 50000 or less. When the number average molecular weight is within the above-described range, it is possible to retain a constant shape after coating or after construction while making the coatability or flexibility of the resin composition favorable, and it is thus possible to easily form heat-dissipating materials from the resin composition. In addition, it becomes easy to appropriately disperse and blend a large amount of the filler while securing the flexibility of the resin composition, and it also becomes easy to enhance the thermal conductivity. The number average molecular weight is more preferably 7000 or more and 40000 or less and still more preferably 10000 or more and 30000 or less.

The silicone resin appropriately is a liquid substance at normal temperature (25°C) and normal pressure (1 atm). When the silicone resin is liquid, the coatability or flexibility of the resin composition is likely to be favorable. In addition, it becomes easy to appropriately disperse and blend a large amount of the filler while maintaining the resin composition at a low viscosity.

The resin composition may be a curable resin composition or a non-curable resin composition. In the case of a curable resin composition, the resin composition may be a one-component curable resin composition or may be a two-component curable resin composition. In the case of a one-component curable resin composition, as the silicone resin, a silicone resin that serves as a base resin and a silicone resin that serves as a curing agent may be incorporated thereinto, and more specifically, the organopolysiloxane having an alkenyl group and the organopolysiloxane having a hydrosilyl group are preferably incorporated thereinto.

In addition, in the case of the two-component curable resin composition, the resin composition only needs to constitute any one component out of the two components. Therefore, the resin composition only needs to contain either a silicone resin that serves as a base resin or a silicone resin that serves as a curing agent. More specifically, the resin composition appropriately contains any of the organopolysiloxane having an alkenyl group and the organopolysiloxane having a hydrosilyl group.

However, even in the case of the two-component curable resin composition, the silicone resin may contain, in addition to the organopolysiloxane having an alkenyl group or the organopolysiloxanes having a hydrosilyl group, the organopolysiloxanes having a hydrosilyl group or the organopolysiloxane having an alkenyl group as long as curing does not progress.

In addition, in the case of the two-component curable resin composition, a mixture of a first component and a second component may be the resin composition of the present invention.

In the case of the two-component curable resin composition, for example, both the first component and the second component are preferably composed of a resin composition containing a polyorganosiloxane, a filler, and a silicone resin. In addition, the two-component curable resin composition preferably contains the organopolysiloxane having an alkenyl group as the first component and the organopolysiloxanes having a hydrosilyl group as the second component.

In addition, the curable resin composition may contain the above-described non-reactive organopolysiloxane or may contain, for example, in addition to the organopolysiloxane having an alkenyl group or the organopolysiloxanes having a hydrosilyl group, an organopolysiloxane having no addition reactive groups as the silicone resin.

In addition, the resin composition may be a non-curable resin composition, and in such a case, for example, silicone oil may be used as the silicone resin.

A part of the silicone resin may be a by-product that is generated in a process of producing the above-described organopolysiloxane. In the case of containing a by-product that is generated in the process of producing the organopolysiloxane, the silicone resin preferably further contain a component other than the by-product.

The content of the silicone resin in the resin composition is preferably 3 mass% or more and 80 mass% or less based on 100 mass% of the resin composition. When the content of the silicone resin is set within the above-described range, it is possible to appropriately retain the filler with the silicone resin. In addition, it becomes easy to enhance the thermal conductivity while maintaining the flexibility of the resin composition. The content of the silicone resin in the resin composition is more preferably 5 mass% or more and 70 mass% or less and still more preferably 10 mass% or more and 60 mass% or less.

### (Additive)

The resin composition of the present invention may contain an additive other than the above-described organopolysiloxane, filler, and silicone resin as necessary to an extent that the effect of the present invention is not impaired.

For example, in a case where the silicone resin is a curable silicone resin, it is normal to incorporate a curing catalyst into the resin composition. In a case where the silicone resin is an addition reaction-type silicone resin, examples of the curing catalyst include platinum-based catalysts, palladium-based catalysts, and rhodium-based catalysts. The curing catalyst is a catalyst for curing the base resin and the curing agent. The amount of the curing catalyst blended is normally 0.1 to 200 ppm and preferably 0.5 to 100 ppm relative to the mass of the silicone resin.

In addition, aside from the curing catalyst, an additive such as an alkoxysilane compound, an antioxidant, a heat stabilizer, a colorant, a fire retardant, or an antistatic agent may be incorporated. The other components may be used singly, or in combination of two or more.

### [Physical properties and application of resin composition]

The puncture resistance of the resin composition of the present invention is preferably 100 mN or less, more preferably 90 mN or less, and still more preferably 80 mN or less. When the puncture resistance is as low as described above, it can be said that the adsorbing properties between the polyorganosiloxane and the filler are excellent and the polyorganosiloxane makes it possible to disperse the filler in the resin sufficiently. The lower limit of the puncture resistance is not particularly limited and may be, for example, 1 mN or more or 2 mN or more. The puncture resistance is measured by a method to be described in Examples described later.

The resin composition of the present invention is excellent in terms of thermal conductivity and low viscosity as described above and thus can be suitably used for heat-dissipating materials such as heat-dissipating silicone grease or heat-dissipating silicone sheets. In addition, the resin composition of the present invention is used in electronic devices and is preferably used to radiate heat from a variety of electronic components. Specifically, the resin composition of the present invention is capable of effectively radiating heat generated from an electronic component by disposing the resin composition between the electronic component such as a semiconductor element and a heat sink in a cured state as necessary.

### Examples

Hereinafter, the present invention will be described in more detail using Examples, but the present invention is not limited to these Examples by any means.

### [Number average molecular weight]

The number average molecular weights of polyorganosiloxanes were measured under the following conditions.

The number average molecular weights were measured using "APC system" manufactured by Waters Corporation as a measuring instrument, HSPgel HR MB-M 6.0 × 150 mm as a column, and THF as a solvent at a flow rate of 0.5 mL/min and a temperature of 40°C.

### [Puncture resistance]

The puncture resistance of resin compositions was measured by a method to be shown below.

A resin composition was defoamed, and 30 g of the defoamed thermally conductive composition was introduced into a cylindrical container having a diameter of 25 mm. Next, a puncture rod having a disc-like member with a diameter of 2 mm and a thickness 1 mm at a front end (the diameter of the rod was 1.8 mm) was pressed against the thermally conductive composition introduced into the container from the front end side of the puncture rod at a rate of 10 mm/minute (puncture rate), and a load (mN) when the front end of the puncture rod reached a depth of 2 mm from a liquid surface was measured. Based on the measured load, the puncture resistance was evaluated by the following evaluation standards. A material of the puncture rod was stainless steel. The load was measured at 25°C with "ZTS-5N" manufactured by IMADA Co., Ltd.

Furthermore, the adsorbing properties of fillers were evaluated based on the measured values of the puncture resistance. The evaluation standards are as described below.
AA: 80 mN or less
A: More than 80 mN and 90 mN or less
B: More than 90 mN and 100 mN or less
C: More than 100 mN

### [Raw materials used]

Each raw material used in Examples and Comparative Examples is as described below.

### (Filler)

Graphite: π electron included, graphite powder, average particle diameter: 10 µm, scaly shape

### (Polyorganosiloxanes)

As polyorganosiloxanes used in Examples and Comparative Examples, polyorganosiloxanes synthesized in Synthesis Examples 1 to 11 and Comparative Synthesis Examples 1 to 8 below were used.

### <Synthesis Example 1>

110 g of an organosiloxane compound (n = 236) having a 1,3-diol group that is represented by a formula (15), 1.4 g of 1-pyrenecarboxaldehyde as a monomer, 50 g of toluene as a solvent, and furthermore, 0.6 g of a catalyst (manufactured by Organo Corporation, "Amberlyst 15 dry") were reacted together in a nitrogen atmosphere at 100°C for 24 hours. After that reaction, the components were filtered with a 5.0 µm PTFE filter to remove the catalyst, and a filtrate was concentrated with a rotary evaporator and a vacuum dryer, thereby obtaining a polyorganosiloxane (polyorganosiloxane (1)) of Synthesis Example 1. A reaction formula is as shown below. Meanwhile, it was confirmed that the following reaction progressed by ¹H NMR measurement. The measurement was performed using "ECX-400" manufactured by JEOL Ltd. as an NMR measuring instrument and deuterated chloroform as a solvent under conditions of a specimen concentration of 1 wt%, 25°C, a measuring frequency of 400 MHz, and a cumulative count of eight times. For the other Synthesis Examples and Comparative Synthesis Examples as well, similarly, the progress of the reactions was confirmed by ¹H NMR measurement.

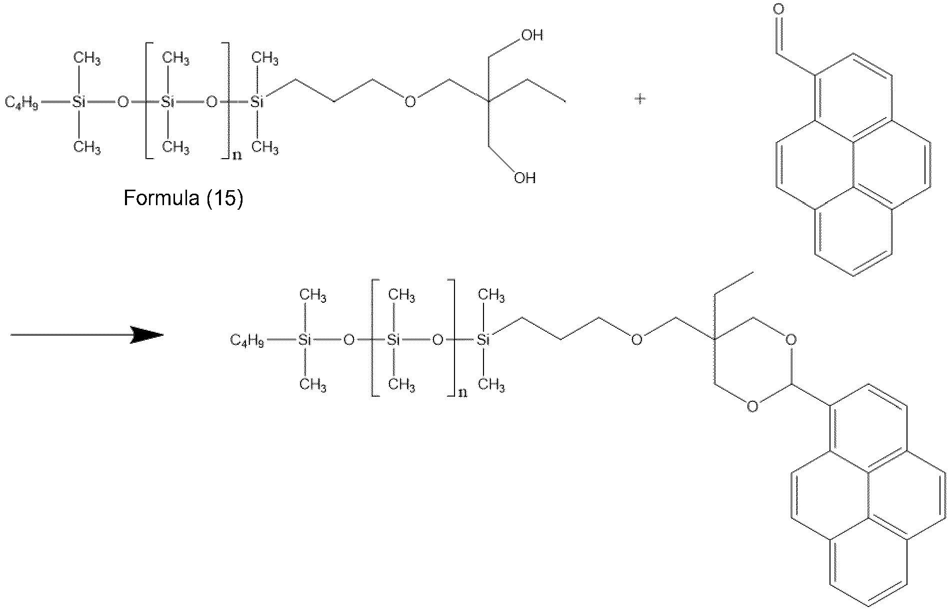

### <Synthesis Example 2>

Synthesis was performed in the same manner as in Synthesis Example 1 except that the organosiloxane compound of the formula (15) was changed to a compound with n = 263 and the amount of the compound was changed to 122 g, thereby obtaining a polyorganosiloxane (polyorganosiloxane (2)) of Synthesis Example 2. A reaction formula is the same as that in Synthesis Example 1 except that the compound of the formula (15) was changed to the compound with n = 263 and will thus not be described again.

### <Synthesis Example 3>

10 g of the polyorganosiloxane (1) obtained in Synthesis Example 1, 5 g of octamethylcyclotetrasiloxane as an extender, 10 g of toluene as a solvent, and 0.3 g of a catalyst (manufactured by Organo Corporation, "Amberlyst 15 dry") were reacted together in a nitrogen atmosphere at 80°C for 24 hours. After that reaction, the components were filtered with a 5.0 µm PTFE filter to remove the catalyst, and a filtrate was concentrated with a rotary evaporator and a vacuum dryer. Subsequently, a concentrated residue was washed using 20 g of acetone to extract and remove unreacted octamethylcyclotetrasiloxane, and the concentrated residue was concentrated again with the rotary evaporator and the vacuum dryer to remove a trace amount of acetone that had been incorporated thereinto, and a polyorganosiloxane (polyorganosiloxane (3)) of Synthesis Example 3 was obtained. A reaction formula is as shown below.

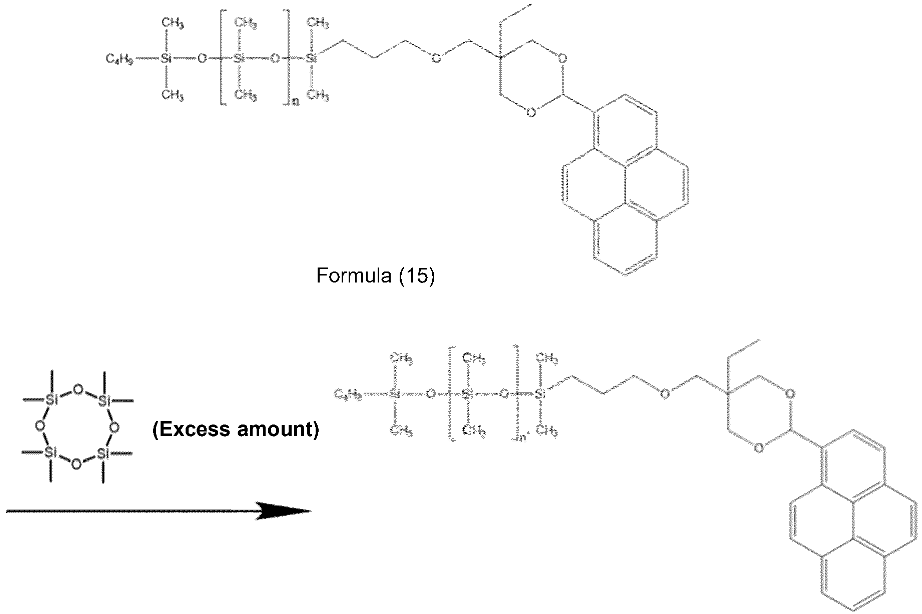

In the polyorganosiloxane (3) obtained as described above, n' was 330.

### <Synthesis Example 4>

Synthesis was performed in the same manner as in Synthesis Example 1 except that the organosiloxane compound of the formula (15) was changed to 67.1 g of a compound with n = 142, thereby obtaining an organopolysiloxane (polyorganosiloxane (4)) of Synthesis Example 4. A reaction formula is the same as that in Synthesis Example 1 except that the compound of the formula (15) was changed to the compound with n = 142 and will thus not be described again.

### <Synthesis Example 5>

A polyorganosiloxane (polyorganosiloxane (5)) of Synthesis Example 5 was obtained in the same manner as in Synthesis Example 1 except that the monomer was changed to 1.2 g of 9-anthracenecarboxaldehyde. A reaction formula can be shown as below.

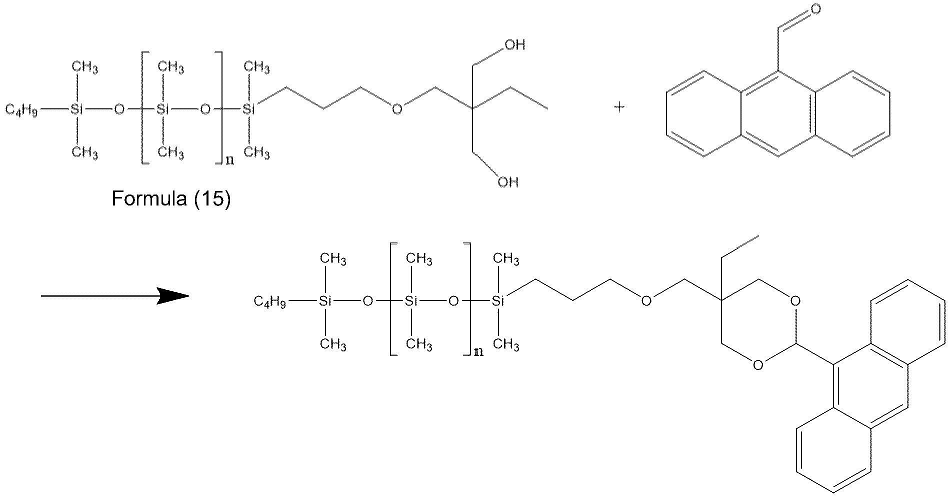

### <Synthesis Example 6>

A polyorganosiloxane 6 (polyorganosiloxane (6)) of Synthesis Example 6 was obtained in the same manner as in Synthesis Example 1 except that the monomer was changed to 1.7 g of 3-perylenecarboxaldehyde. A reaction formula can be shown as below.

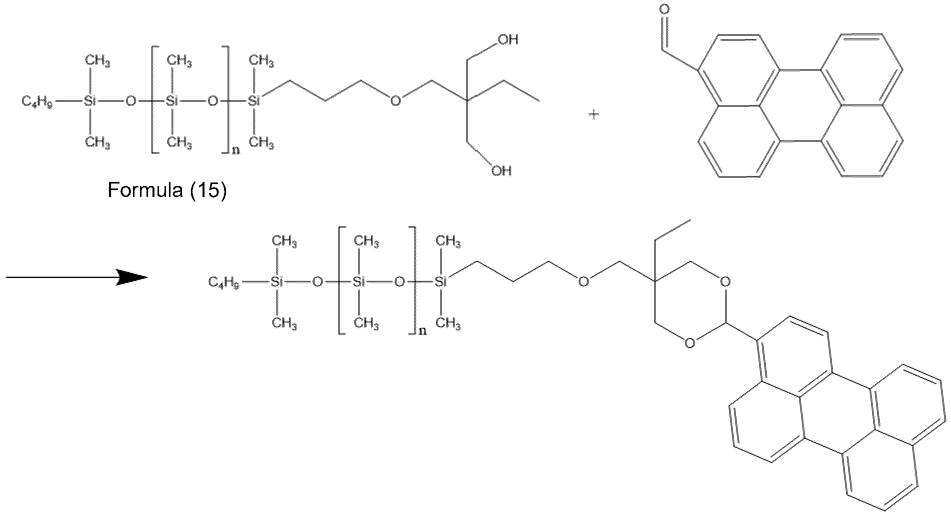

### <Synthesis Example 7>

17 g of an organosiloxane compound having a hydrosilyl group (n = 216) represented by a formula (17), 0.6 g of (1-pyrene)methyl methacrylate as a monomer, 50 g of toluene as a solvent, and furthermore, 0.01 g of a Karstedt catalyst (platinum-based catalyst) as a catalyst were reacted together in a nitrogen atmosphere at 100°C for 24 hours. A reaction liquid was concentrated with a rotary evaporator and a vacuum dryer, thereby obtaining a polyorganosiloxane (polyorganosiloxane (7)) of Synthesis Example 7. A reaction formula can be shown as below.

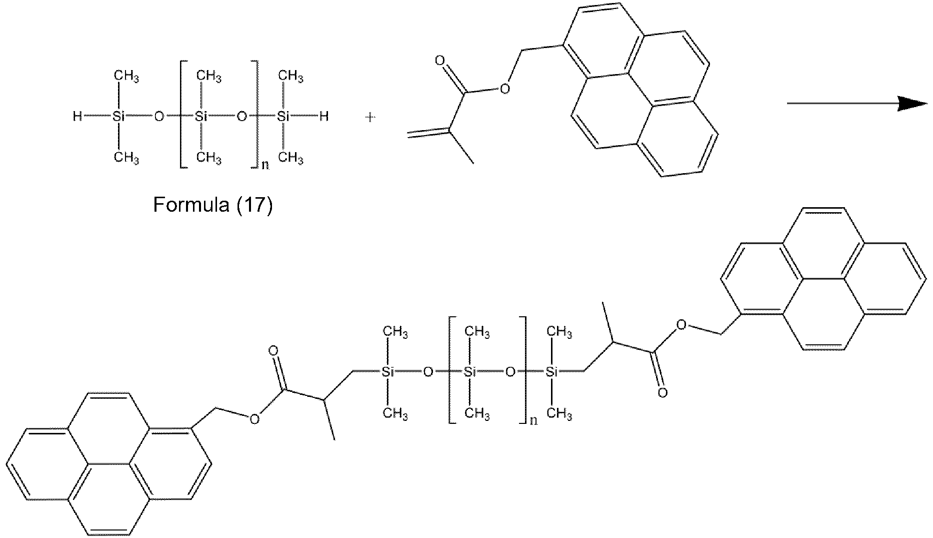

### <Synthesis Example 8>

Synthesis was performed in the same manner as in Synthesis Example 7 except that the organosiloxane compound of the formula (17) was changed to a compound with n = 364 and the amount of the compound was changed to 28 g, thereby obtaining a polyorganosiloxane (polyorganosiloxane (8)) of Synthesis Example 8. A reaction formula is the same as that in Synthesis Example 7 except that the compound of the formula (17) was changed to the compound with n = 364 and will thus not be described again.

### <Synthesis Example 9>

Synthesis was performed in the same manner as in Synthesis Example 7 except that the organosiloxane compound of the formula (17) was changed to a compound with n = 135 and the amount of the compound was changed to 11 g, thereby obtaining a polyorganosiloxane (polyorganosiloxane (9)) of Synthesis Example 9. A reaction formula is the same as that in Synthesis Example 7 except that the compound of the formula (17) was changed to the compound with n = 135 and will thus not be described again.

### <Synthesis Example 10>

25 g of an organosiloxane compound having a hydrosilyl group (m = 1, n = 335) represented by a formula (18), 0.3 g of 1-pyrenemethyl methacrylate as a monomer, 50 g of toluene as a solvent, and furthermore, 0.01 g of a Karstedt catalyst (platinum-based catalyst) as a catalyst were reacted together in a nitrogen atmosphere at 100°C for 24 hours. A reaction liquid was concentrated with a rotary evaporator and a vacuum dryer, thereby obtaining a polyorganosiloxane (polyorganosiloxane (10)) of Synthesis Example 10. A reaction formula can be shown as below.

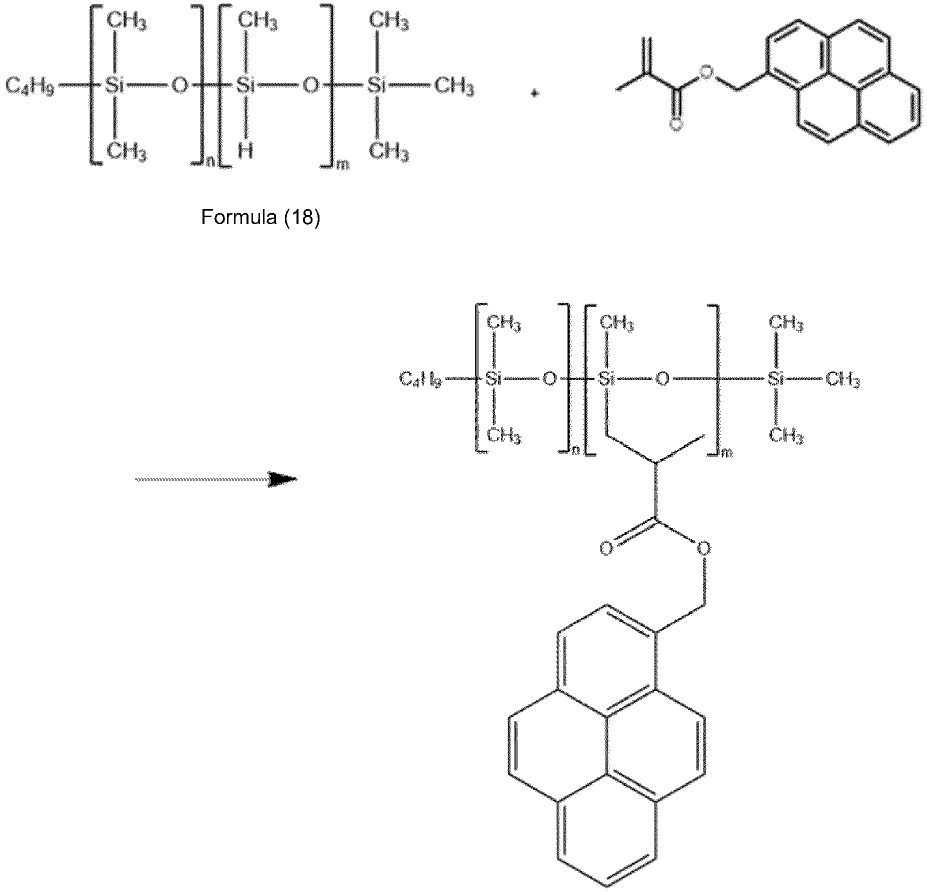

### <Synthesis Example 11>

Synthesis was performed in the same manner as in Synthesis Example 10 except that the organosiloxane compound of the formula (18) was changed to a compound with m = 4 and the amount of 1-pyrenemethyl methacrylate was changed to 1.2 g, thereby obtaining a polyorganosiloxane (polyorganosiloxane (11)) of Synthesis Example 11. A reaction formula is the same as that in Synthesis Example 10 except that the compound of the formula (18) was changed to the compound with m = 4 and will thus not be described again.

### <Synthesis Example 12>

A polyorganosiloxane (polyorganosiloxane (12)) of Synthesis Example 12 was obtained in the same manner as Synthesis Example 1 except that the monomer was changed to 1.5 g of [1,1':4',1''] terphenylcarboxaldehyde. A reaction formula can be shown as below.

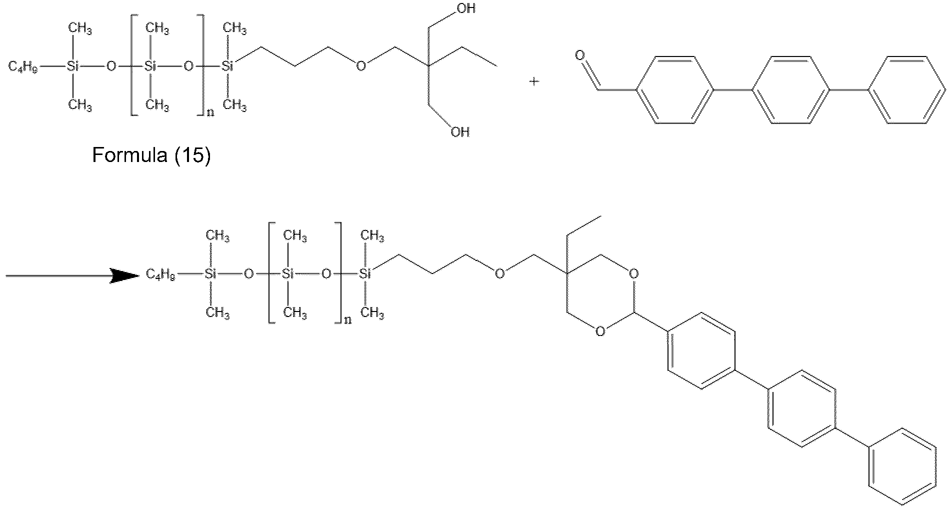

### <Comparative Synthesis Example 1>

Synthesis was performed in the same manner as in Synthesis Example 1 except that the organosiloxane compound of the formula (15) was changed to a compound with n = 74 and the amount of 1-pyrenecarboxaldehyde was changed to 4.2 g, thereby obtaining a polyorganosiloxane (polyorganosiloxane (13)) of Comparative Synthesis Example 1. A reaction formula is the same as that in Synthesis Example 1 except that the compound of the formula (15) was changed to the compound with n = 74 and will thus not be described again.

### <Comparative Synthesis Example 2>

A polyorganosiloxane (polyorganosiloxane (14)) of Comparative Synthesis Example 2 was obtained by the same method as in Synthesis Example 3 except that the amount of octamethylcyclotetrasiloxane was changed to 20 g. A reaction formula is the same as that in Synthesis Example 3 except that n' became 667 and will thus not be described again.

### <Comparative Synthesis Example 3>

Synthesis was performed in the same manner as in Synthesis Example 7 except that the organosiloxane compound of the formula (17) was changed to a compound with n = 73 and the amount of the organosiloxane compound was changed to 5 g, thereby obtaining a polyorganosiloxane (polyorganosiloxane (15)) of Comparative Synthesis Example 3. A reaction formula is the same as that in Synthesis Example 7 except that the compound of the formula (17) was changed to the compound with n = 73 and will thus not be described again.

### <Comparative Synthesis Example 4>

Synthesis was performed in the same manner as in Synthesis Example 7 except that the organosiloxane compound of the formula (17) was changed to a compound with n = 836 and the amount of the organosiloxane compound was changed to 63 g, thereby obtaining a polyorganosiloxane (polyorganosiloxane (16)) of Comparative Synthesis Example 4. A reaction formula is the same as that in Synthesis Example 7 except that the compound of the formula (17) was changed to the compound with n = 836 and will thus not be described again.

### <Comparative Synthesis Example 5>

A polyorganosiloxane (polyorganosiloxane (17)) of Comparative Synthesis Example 5 was obtained by the same method as in Synthesis Example 1 except that the monomer was changed to 0.97 g of 2-naphthaldehyde. A reaction formula can be shown as below.

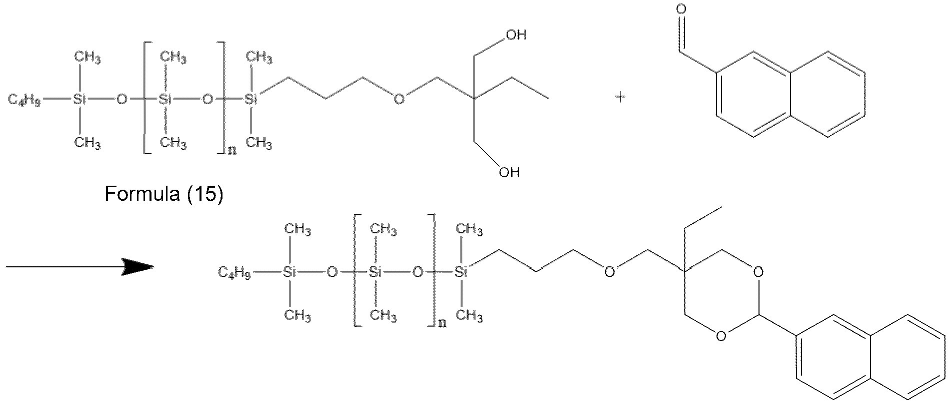

### <Comparative Synthesis Example 6>

Synthesis was performed in the same manner as in Synthesis Example 10 except that the organosiloxane compound of the formula (18) was changed to a compound with m = 8, the amount of 1-pyrenemethyl methacrylate was changed to 2.4 g, and in addition, the amount of toluene was changed to 150 g, thereby obtaining a polyorganosiloxane (polyorganosiloxane (18)) of Comparative Synthesis Example 6. A reaction formula is the same as that in Synthesis Example 10 except that the compound of the formula (18) was changed to the compound with m = 8 and will thus not be described again.

### <Comparative Synthesis Example 7>

A polyorganosiloxane (polyorganosiloxane (19)) of Comparative Synthesis Example 7 was obtained in the same manner as in Synthesis Example 1 except that the monomer was changed to 0.97 g of 2-naphthaldehyde, and the organosiloxane compound was changed to 65.7 g of a compound with n = 142. A reaction formula is the same as that in Comparative Synthesis Example 5 except that the compound of the formula (15) was changed to the compound with n = 142 and will thus not be described again.

### <Comparative Synthesis Example 8>

A polyorganosiloxane (polyorganosiloxane (20)) of Comparative Synthesis Example 8 was obtained in the same manner as in Synthesis Example 3 except that the organosiloxane compound was changed to 7 g of the polyorganosiloxane (19) obtained in Comparative Synthesis Example 7, and the amount of octamethylcyclotetrasiloxane was changed to 20 g, respectively. A reaction formula can be shown as below.

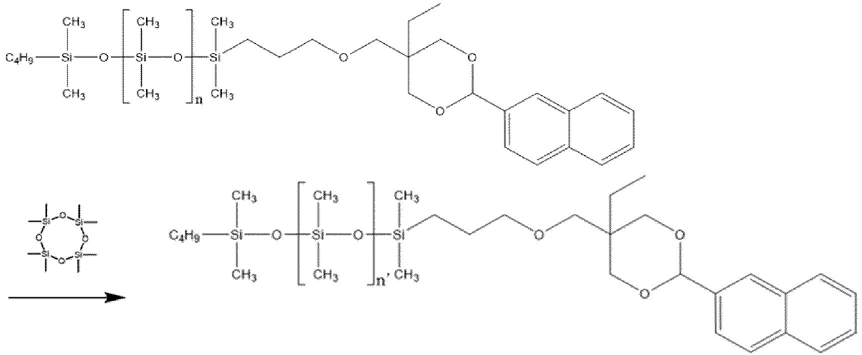

In the polyorganosiloxane (3) obtained as described above, n' was 330.

### (Resin)

Polydimethylsiloxane having a number average molecular weight of 20000

### [Examples 1 to 12 and Comparative Examples 1 to 8]

100 parts by mass of a resin, 75.5 parts by mass of a filler, and 11.1 parts by mass of a polyorganosiloxane were mixed together to obtain a silicone resin composition. For the obtained silicone resin composition, a puncture resistance was measured, and the filler adsorbing properties were evaluated based on the measured value. The evaluation results are shown in Table 1.

Table 1 also shows a polyorganosiloxane used in each of Examples and Comparative Examples and details thereof.

**[Table 1]**

| | Polyorganosiloxane | Number of linkers | Number average molecular weight | Number average molecular weight /Number of linkers | Number of conjugated rings | B structure | A - B introduction position | | | m | Evaluation | |
|---|---|---|---|---|---|---|---|---|---|---|---|---|
| | | | | | | | | | | | Puncture resistance (mN) | Filler adsorbing properties determination |
| Example 1 | Polyorganosiloxane (1) | 1 | 18000 | 18000 | 4 | Condensed ring | Single terminal | | | - | 63 | AA |
| Example 2 | Polyorganosiloxane (2) | 1 | 20000 | 20000 | 4 | Condensed ring | Single terminal | | | - | 60 | AA |
| Example 3 | Polyorganosiloxane (3) | 1 | 25000 | 25000 | 4 | Condensed ring | Single terminal | | | - | 58 | AA |
| Example 4 | Polyorganosiloxane (4) | 1 | 11000 | 11000 | 4 | Condensed ring | Single terminal | | | - | 81 | A |
| Example 5 | Polyorganosiloxane (5) | 1 | 18000 | 18000 | 3 | Condensed ring | Single terminal | | | - | 82 | A |
| Example 6 | Polyorganosiloxane (6) | 1 | 18000 | 18000 | 5 | Condensed ring | Single terminal | | | - | 41 | AA |
| Example 7 | Polyorganosiloxane (7) | 2 | 17000 | 8500 | 4 | Condensed ring | | Both terminals | | - | 85 | A |
| Example 8 | Polyorganosiloxane (8) | 2 | 28000 | 14000 | 4 | Condensed ring | | Both terminals | | - | 89 | A |
| Example 9 | Polyorganosiloxane (9) | 2 | 11000 | 5500 | 4 | Condensed ring | | Both terminals | | - | 93 | B |
| Example 10 | Polyorganosiloxane (10) | 1 | 25000 | 25000 | 4 | Condensed ring | | | Side chain | 1 | 95 | B |
| Example 11 | Polyorganosiloxane (11) | 4 | 25000 | 6250 | 4 | Condensed ring | | | Side chain | 4 | 99 | B |
| Example 12 | Polyorganosiloxane (12) | 1 | 18000 | 18000 | 3 | Non-condensed ring | Single terminal | | | - | 92 | B |
| Comparative Example 1 | Polyorganosiloxane (13) | 1 | 6000 | 6000 | 4 | Condensed ring | Single terminal | | | - | 133 | C |
| Comparative Example 2 | Polyorganosiloxane (14) | 1 | 50000 | 50000 | 4 | Condensed ring | Single terminal | | | - | 113 | C |
| Comparative Example 3 | Polyorganosiloxane (15) | 2 | 5000 | 2500 | 4 | Condensed ring | | Both terminals | | - | 146 | C |
| Comparative Example 4 | Polyorganosiloxane (16) | 2 | 63000 | 31500 | 4 | Condensed ring | | Both terminals | | - | 115 | C |
| Comparative Example 5 | Polyorganosiloxane (17) | 1 | 18000 | 18000 | 2 | Condensed ring | Single terminal | | | - | 133 | C |
| Comparative Example 6 | Polyorganosiloxane (18) | 8 | 25000 | 3125 | 4 | Condensed ring | | | Side chain | 8 | 134 | C |
| Comparative Example 7 | Polyorganosiloxane (19) | 1 | 10000 | 10000 | 2 | Condensed ring | Single terminal | | | - | 125 | C |
| Comparative Example 8 | Polyorganosiloxane (20) | 1 | 25000 | 25000 | 2 | Condensed ring | Single terminal | | | - | 125 | C |

| | | | | | | | | | | | | |
|---|---|---|---|---|---|---|---|---|---|---|---|---|
| * In Table 1, the number of linkers is the number of Rs, which are groups represented by A - B among Rs in the formula (1). | | | | | | | | | | | | |

As is clear from Examples described above, it was evident that when the polyorganosiloxanes satisfying the requirements of the present invention were blended with the resin compositions, the puncture resistance of the compositions was low, the adsorbing properties to the fillers were high, and the compatibility with the resins was excellent.

In contrast, since the polyorganosiloxanes used in Comparative Examples 1 and 3 had number average molecular weights below a predetermined value, the results were that the adsorbing properties to the fillers were low, the polyorganosiloxanes were not capable of sufficiently dispersing the fillers, and the puncture resistance of the resin compositions was high.

The polyorganosiloxanes used in Comparative Examples 2 and 4 had number average molecular weights above the predetermined value, and the results were that the puncture resistance of the resin compositions was high. This is presumably because the fillers aggregated due to loop structures, whereby the polyorganosiloxanes were not capable of sufficiently dispersing the fillers.

In addition, in the polyorganosiloxanes used in Comparative Examples 5, 7, and 8, since the numbers of conjugated rings constituting a common conjugation system in the polyorganosiloxanes were less than three, the results were that the adsorbing properties to the fillers were low, the polyorganosiloxanes were not capable of sufficiently dispersing the fillers, and the puncture resistance of the resin compositions was high.

Furthermore, in the polyorganosiloxane used in Comparative Example 6, since Mn/N_{(A - B)} was below a predetermined value, the proportion of a polymer main chain in the entire molecule was too low, and consequently, the polyorganosiloxane was not sufficiently compatible with the resin, whereby the results were that the polyorganosiloxanes were not capable of sufficiently dispersing the filler and the puncture resistance of the resin composition was high.

## Claims

1. A polyorganosiloxane having a structure represented by the following formula (1), wherein the polyorganosiloxane has a number average molecular weight of 10000 or more and 40000 or less, and
a ratio (Mn/N_{(A - B)}) of the number average molecular weight (Mn) to an average number (N_{(A - B)}) of groups represented by A - B included in one molecule of the polyorganosiloxane is 5000 or more, 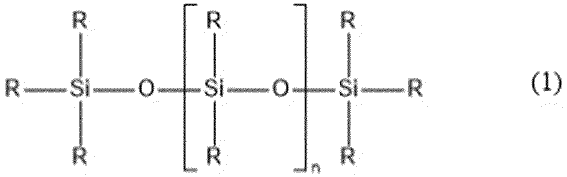
Rs being each independently a group represented by the A - B or a monovalent hydrocarbon group having one to four carbon atoms,
at least one R of the Rs being a group represented by the A - B,
the A being a divalent organic group bonded to a silicon atom, the B being three or more conjugated ring structures constituting a common conjugated system, and
n being an integer of one or more.

2. The polyorganosiloxane according to claim 1, wherein the average number (N_{(A - B)}) of the groups represented by A - B is one or more and eight or less.

3. The polyorganosiloxane according to claim 1 or 2, wherein the A has a cyclic ether or ester in a structure thereof.

4. The polyorganosiloxane according to claim 1 or 2, wherein the B is a condensed ring compound.

5. The polyorganosiloxane according to claim 1 or 2 represented by the following formula (2): 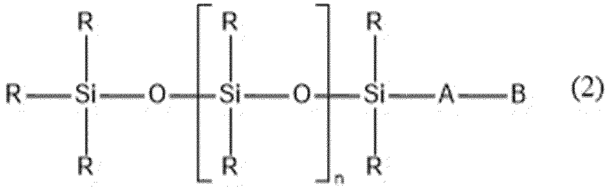 wherein R is a monovalent hydrocarbon group having one to four carbon atoms, and A, B, and n are the same as those in the formula (1).

6. The polyorganosiloxane according to claim 1 or 2 represented by the following formula (3): 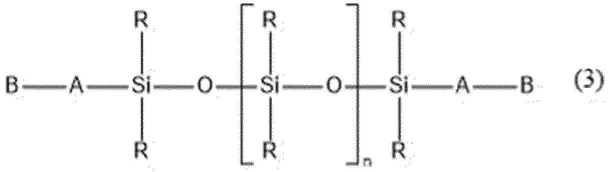 wherein R is a monovalent hydrocarbon group having one to four carbon atoms, and A, B, and n are the same as those in the formula (1).

7. The polyorganosiloxane according to claim 1 or 2 represented by the following formula (4): 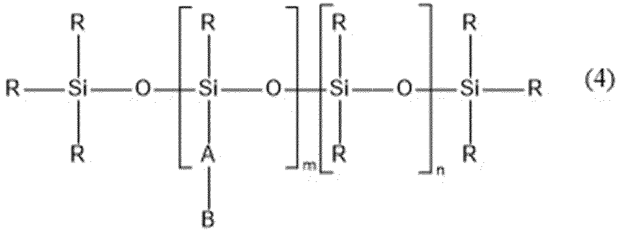 wherein R is a monovalent hydrocarbon group having one to four carbon atoms, m is an integer of one or more and eight or less, and A, B, and n are the same as those in the formula (1).

8. The polyorganosiloxane according to claim 7, wherein the m is one or two.

9. A resin composition comprising:
the polyorganosiloxane according to claim 1 or 2;
a silicone resin; and
a filler.
